# EUROPÄISCHE PATENTSCHRIFT

(11) **EP 2 322 341 B1**
(45) Veröffentlichungstag und Bekanntmachung des Hinweises auf die Patenterteilung: **04.01.2012**
(21) Anmeldenummer: 09014253.0
(22) Anmeldetag: 14.11.2009
(51) Int. Cl.: B29C 65/82, G01M 3/40

(54) **Verfahren zur Schmelzzustandskontrolle beim Herstellen einer Kunststoffschweissnaht**
Method for monitoring the melt status when producing a plastic weld seam
Procédé de contrôle de l'état de fusion lors de la fabrication d'une couture d'une soudure de matière synthétique

(43) Veröffentlichungstag der Anmeldung: 18.05.2011
(73) Patentinhaber: Leister Process Technologies, 6056 Kägiswil (CH)
(72) Erfinder: Ott, Simon, 5105 Auenstein (CH); Gubler, Ulrich, 6343 Rokreuz (CH)
(74) Vertreter: Klocke, Peter

(56) Entgegenhaltungen:
- EP-A1- 1 460 406
- JP-A- 2003 191 341

## Beschreibung

Die Erfindung betrifft ein Verfahren zur Ermittlung des temperaturabhängigen Zustands, insbesondere des Schmelzzustandes und/oder der Schmelzmenge, von thermoplastischem Kunststoffmaterial beim Herstellen einer Schweißnaht aus thermoplastischem Kunststoffmaterial mittels eines Kunststoffschweißgeräts.

Beim Kunststoffschweißen werden zu verbindende Kunststoffteile aus thermoplastischem Kunststoffmaterial zur Bildung einer Schweißnaht lokal auf Schweißtemperatur erhitzt und gleichzeitig oder anschließend aneinander gepresst. Auf diese Weise können die Kunststoffteile, beispielsweise Kunststoffbahnen, Kunststoffplanen, Kunststofffolien, Kunststoffspritzgussteile oder Kunststoffextrusionsteile mit überlappenden, stoßenden oder geringfügig beabstandeten Randbereichen miteinander sicher verbunden werden. In Abhängigkeit von der Anordnung der Kunststoffteile zueinander wird die Schweißnaht mittels plastifiziertem Material der Kunststoffteile selbst bzw. mit zugeführtem elastischen Schmelzgut aus thermoplastischem Kunststoffmaterial hergestellt. Bei überlappend angeordneten, insbesondere biegeschlaffen Kunststoffteilen sind die Kunststoffschweißnähte auf einfachste Weise, d.h. ohne die Verwendung von zusätzlichen plastifizierten Kunststoffsträngen, mittels Handschweißgeräten oder Schweißautomaten herstellbar.

Mittels Schweißautomaten, die den Schweißvorgang voll automatisch ausführen, werden qualitativ hochwertige Schweißnähte erzeugt, die die Kunststoffteile nicht nur dauerhaft mechanisch zug- und druckfest, sondern auch absolut dicht miteinander verbinden. Spritzguss- oder Extrusionsteile werden meist mit ortsfesten Schweißautomaten gefügt, die auf Heißstempel, Vibration, Ultraschall, Infrarotstrahlung oder Laser basieren. Flächige Kunststoffmaterialien wie Bahnen, Planen oder Folien werden ausgelegt und mit sich fortbewegenden Schweißautomaten gefügt. Sie werden in vielfältigen Ausführungsformen unter anderem zur Verschweißung von Kunststoffdichtungsbahnen im Hoch-, Tief-, Tunnel-, Deponie- und Gewässerbau eingesetzt. Sie werden insbesondere für das Überlappungsschweißen von Kunststoffbahnen verwendet, bei dem die Bahnen an ihren Randbereichen durch einen Heizkeil oder Heißluft erwärmt, angeschmolzen bzw. plastifiziert und anschließend unter Druckeinwirkung mittels Andruckrollen stoffschlüssig unter Bildung einer Schweißnaht miteinander verbunden werden. Dabei wird die Heißluftdüse oder der elektrisch oder mittels heißem Gas beheizte Heizkeil bei anliegenden Folienbahnen zwischen den Bahnen geführt.

An das Verlegen und Verschweißen von Dichtungsbahnen werden qualitativ hohe Ansprüche gestellt, da kleine Fehler teure Folgen nach sich ziehen können. Fachgerecht eingebaute Kunststoffdichtungsbahnen sind absolut flüssigkeitsdicht verbunden, d. h. es sind keine Porenkanäle im Bereich der Schweißnaht vorhanden, durch die Wasser durch hydrostatischen Druck, Schwerkraft und Kapillarwirkung hindurchtreten kann. Um optimale Schweißergebnisse zu erzielen, werden dazu in der Regel moderne Schweißautomaten eingesetzt, die die kritischen Schweißparameter wie Heizkeiltemperatur, Fügekraft (Anpresskraft), Fügeweg und Schweißgeschwindigkeit erfassen und selbstständig in Verbindung mit eingestellten Sollwerten regeln. Diese zeigen die Istwerte auf einem Display an und melden mit einem Signalton unzulässige Abweichungen vom Sollwert. Solche Schweißautomaten sind meist zusätzlich mit einer Datenerfassung ausgerüstet, die in regelmäßigen Zeitabständen, zum Beispiel jede Sekunde die Schweißparameter elektronisch speichert. Die gespeicherten Daten können nach dem Schweißen der Naht ausgelesen, zusammenhängend dargestellt, ausgedruckt und analysiert werden. Festgestellt können damit jedoch häufig nur Bereiche abrupter Dickenänderung der Schweißnaht, wo die Fügekraft sich sprunghaft ändert. Solche Stellen können dann in Augenschein genommen, bewertet und ggf. nachgebessert werden.

Für kritische Anwendungen werden daher die Dichtungsbahnen in vielen Fällen weitgehend maschinell mit Überlapp-Doppeischweißnähten zusammengefügt. Dabei wird ein Prüfkanal zwischen den beiden parallel verlaufenden Schweißnähten erzeugt, so dass über die gesamte Schweißnahtlänge Fehlstellen der Schweißnähte durch Druckluftbeaufschlagung des Prüfkanals sicher festgestellt werden können. Die Überprüfung auf Fehlstellen ist bei einer solchen Überlapp-Doppelschweißnaht aufwändig und daher unvorteilhaft. Überlapp-Einzelschweißnähte, die wie die Doppelschweißnähte mit Heizkeilschweißautomaten mit geregelter und dokumentierter Prozesssteuerung hergestellt werden, können in keiner Weise zuverlässig auf etwaige Fehlstellen geprüft werden, es können lediglich die gespeicherten Prozessdaten wie vorstehend beschrieben ausgewertet werden.

Ausgehend von dem vorstehend beschriebenen Stand der Technik liegt der Erfindung die Aufgabe zugrunde, eine Möglichkeit vorzuschlagen, bei der die Güte einer Schweißnaht schon während der Herstellung, sowohl bei einer Doppel- wie auch bei einer Einfachschweißnaht, zuverlässig festgestellt werden kann.

Diese Aufgabe wird erfindungsgemäß durch ein Verfahren mit den Merkmalen des Anspruchs 1 gelöst. Weitere vorteilhafte Ausgestaltungen sind den rückbezogenen Ansprüchen zu entnehmen.

Grundgedanke der Erfindung ist es, potenzielle Fehlstellen der Schweißnaht bereits beim Herstellungsprozess zu erkennen, in dem der temperaturabhängige Zustand, insbesondere der Schmelzzustand bzw. die Schmelzmenge des zum Verbinden der Kunststoffteile auf Schmelztemperatur zu bringenden thermoplastischen Kunststoffmaterials, das nach dem Verfestigen die Schweißnaht bildet, an der lokalen Schweißstelle fortlaufend ermittelt wird. Mit dem Begriff temperaturabhängigem Zustand sollen auch bereits Zustände aufgrund von temperaturabhängigen Veränderungen im Kunststoff verstanden werden, die vor dem eigentlichen (sichtbaren und die Schweißung ermöglichenden) Schmelzen auftreten, mithin eine Vorstufe bilden.

Das erfindungsgemäße Verfahren zur Ermittlung des temperaturabhängigen Zustandes, insbesondere des Schmelzzustandes und/oder der Schmelzmenge von thermoplastischem Kunststoffmaterial beim Herstellen einer Schweißnaht aus thermoplastischem Kunststoffmaterial sieht die folgenden Prozessschritte vor:
Zuerst wird das thermoplastische Kunststoffmaterial, beispielsweise zum Verbinden von zwei Kunststoffteilen im Bereich der zu bildenden Schweißnaht auf Schweißtemperatur gebracht, wobei die elektrische Zustandsgröße während der Temperaturbeaufschlagung zur Bildung einer Kunststoffmaterialschmelze vorzugsweise fortlaufend bestimmt und zur weiteren Auswertung des Zustandes des Materials gespeichert wird. Zur Feststellung des temperaturabhängigen Zustandes bzw. Schmelzzustandes, insbesondere des Grades des Plastifizierung und der Schmelzmenge in den drei Raumdimensionen des thermoplastischen Kunststoffmaterials an der Schweißstelle, werden die Messwerte mit und ohne Temperaturbeaufschlagung miteinander und/oder mit Referenz- oder Erfahrungswerten verrechnet. Die so ermittelte Zustandsgröße ist ein Maß für die Qualität der Schweißnaht und kann abgespeichert oder zur Regelung des Schweißautomaten dienen. Als letzter Schnitt kann die Zustandsgröße mit einem Sollwert und/oder mit zwei Eckwerten verglichen werden, die für den Bediener ein Warnsignal auslösen. Die Referenz- oder Erfahrungswerte einer elektrischen Zustandsgröße des thermoplastischen Kunststoffmaterials der Kunststoffteile können im Bereich der Schweißnaht ohne Temperaturbeaufschlagung der Kunststoffteile bestimmt und gespeichert werden, oder alternativ kann anstelle dieser zuerst durchzuführenden Messung auf Erfahrungswerte oder Materialdatenbanken zurückgegriffen werden.

Die Bestimmung der elektrischen Zustandsgröße erfolgt vorzugsweise durch Messung", wie beispielsweise auch in der EP1460406, in der die Messung allerdings erst nach dem Schweißvorgang in erkaltetem Zustand erfolgt. Die Messung hier erfolgt kontinuierlich oder in geeigneten Zeitabständen an der Stelle der mit der Temperaturbeaufschlagung einsetzenden Erwärmung bzw. Plastifizierung, wobei die Oberflächentemperatur des Kunststoffmaterials an dieser Stelle als Zusatzinformation mit erfasst werden kann. Auf diese Weise kann genau festgestellt werden, wann die Plastifizierung des thermoplastischen Kunststoffmaterials einsetzt und wann der Endzustand der Plastifizierung erreicht ist. Im Endzustand ist die Plastifizierung und die Schmelzmenge von thermoplastischen Kunststoffmaterial an der lokalen Schweißstelle für die Herstellung einer hochwertigen Schweißnaht geeignet, die die thermoplastischen Kunststoffteile miteinander fest und dichtend verbindet.

Das Ergebnis der Zustandsmessung kann als Mess- und Regelgröße verwendet werden: Als Messgröße kann sie einer Steuerelektronik des Schweißautomaten zur akustischen und/oder optischen Signalisierung bei lokal unzureichendem Schmelzzustand oder bei lokal zu geringer oder zu großer Schmelzmenge bei der Herstellung der Schweißnaht zugeführt werden. Als Regelgröße kann sie an die Steuerelektronik des Schweißautomaten gegeben werden, die die Schweißparameter des Schweißautomaten, beispielsweise die Heizkeiltemperatur, die Fügekraft oder die Schweißgeschwindigkeit entsprechend anpasst. Vorzugsweise wird die elektrische Zustandsgröße des thermoplastischen Kunststoffmaterials im Bereich der Schweißnaht vor und während des Schweißvorgangs gemessen, ausgewertet und für die Einstellung von Maschinenparametern des Schweißautomaten verwendet.

Bei einer bevorzugten Ausführungsform der Erfindung wird als elektrische Zustandsgröße die Permittivität des thermoplastischen Kunststoffmaterials verwendet. Die Permittivität ist eine physikalische Größe, die die Durchlässigkeit eines Materials für elektrische Felder angibt. Für Permittivität wird auch die veralterte Bezeichnung Dielektrizitätskonstante verwendet. Die Permittivität bezeichnet demnach eine Materialeigenschaft elektrisch isolierender, polarer und unpolarer Stoffe, die auch Dielektrika genannt werden. Bei solchen Materialien sind die Ladungsträger im Allgemeinen nicht frei beweglich. Beim Einbringen in einen Plattenkondensator beeinflussen sie dessen Kapazität. Durch ein äußeres elektrisches Feld können die nicht freien Ladungsträger polarisiert werden. Dadurch kann ein Plattenkondensator mit einem dielelektrischen Material als Zwischenlage bei gleicher anliegender Spannung mehr Energie speichern, als derselbe Plattenkondensator mit einer Lufttrennschicht. Es ist allgemein bekannt, dass thermoplastische Kunststoffmaterialien wie alle Kunststoffe eine Vielzahl von freien polarisierbaren Ladungsträgern aufweisen. Die Permittivität von den meisten thermoplastischen Kunststoffmaterialien ist temperaturabhängig und kann somit als Größe zur Bestimmung des temperaturabhängigen Schmelzzustandes und damit auch der Schmelzmenge des thermoplastischen Kunststoffmaterials während dem Schweißvorgang benutzt werden. Die ermittelte Permittivität lässt auch Rückschlüsse auf die Temperatur im Innern eines Kunststoffes zu.

Messverfahren zur Bestimmung der die Elektrizitätszahl bzw. der Permittivitätszahl sind dem Fachmann geläufig und müssen daher für die bei dem vorstehend beschriebenen Verfahren angewandte dielektrische Spektroskopie nicht näher erläutert werden. Vorzugsweise wird bei dem erfindungsgemäßen Verfahren die Permittivität mittels einer Kondensatoranordnung ermittelt, wobei das Kunststoffmaterial als Dielelektrikum zwischen Elektroden der Kondensatoranordnung verwendet wird. Für die Kondensatoranordnung kann ein einzelner Plattenkondensator oder mehrere als Array angeordnete Plattenkondensatoren verwendet werden. Bei einem Array können die Plattenkondensatoren entlang und/oder senkrecht zur Schweißnaht angeordnet sein. Die Bestimmung der Permittivität erfolgt bei dem erfindungsgemäßen Verfahren beispielsweise indirekt durch Messung von der Amplitude und der Phasenverschiebung von Spannung und Strom bei einer sinusförmigen Beaufschlagung des Plattenkondensators. Der so ermittelbare Messwert ist abhängig von der Frequenz der Wechselspannung und von der Temperatur des Kunststoffmaterials zwischen den Kondensatorplatten. Es kann auch wechselweise oder gleichzeitig mit mehreren Frequenzen gemessen werden und die Amplituden und Phasenverschiebungen bei unterschiedlichen Frequenzen geeignet miteinander verrechnet werden. Alternativ können die Plattenkondensatoren auch mit einzelnen Pulsen oder mit geeigneten Pulsfolgen beaufschlagt werden.

Die einander zugeordneten Elektroden der Kondensatoranordnung können dazu auf einander gegenüberliegenden Seiten des Kunststoffmaterials oder auf einer Seite des thermoplastischen Kunststoffmaterials angeordnet werden. Bei einseitiger Anordnung werden sie prinzipbedingt nebeneinander mit Abstand angeordnet, während sie bei zweiseitiger Anordnung sowohl sich gegenseitig ganz oder teilweise überdeckend wie auch nicht überdeckend seitlich versetzt zueinander angeordnet werden können.

Bei einer günstigen Variante der Erfindung wird ein Teil des Schweißgerätes als eine Elektrode und eine hinter dem thermoplastischen Kunststoffmaterial angeordnete Fläche als andere Elektrode verwendet. Die Fläche kann beispielsweise eine Boden-, Wand- oder Deckenfläche, an der Kunststoffteile zur dauerhaften Abdeckung angebracht wird, oder eine Auflagefläche, die nur zum Verbinden von Kunststoffteilen verwendet wird. Spezielle Kondensatorplatten, die an dem Schweißgerät festgelegt sind, werden in diesem Fall nicht benötigt. Ansonsten sind jedoch mit dem Schweißgerät verbundene Kondensatorplatten notwendig, die zumindest ein Kondensatorplattenpaar bilden und mit dem Schweißgerät entlang der zu erzeugenden Schweißnaht bewegt werden. Bei mehreren Kondensatorplattenpaaren, die das Array von Plattenkondensatoren bilden, kann gleichzeitig oder zeitversetzt an verschiedenen Stellen des thermoplastischen Kunststoffmaterials die Permittivität gemessen werden. Damit kann neben der Breite, der Länge sowie der Dicke der durch Temperaturbeaufschlagung plastifizierten Schmelzmenge des thermoplastischen Kunststoffmaterials für die Schweißnaht und dem temperaturabhängigen Zustand bzw. Schmelzzustand der Schmelzmenge auch ein Vergleichswert des nicht erwärmten nicht plastifizierten Kunststoffmaterials mittels verschiedener Kondensatoren ermittelt werden.

Es hat sich als vorteilhaft erwiesen, wenn die Kondensatoranordnung für die Bestimmung der Permittivität des thermoplastischen Kunststoffmaterials mit verschiedenen Frequenzen betrieben wird. Die Kondensatoranordnung liefert für jede Frequenz eine spezielle Permittivität (Amplitude und Phasenverschiebung), die für die Ermittlung des Schmelzzustandes und/oder der Schmelzmenge geeignet ausgewertet wird.

Die Anwendung des erfindungsgemäßen Verfahrens ist nicht nur auf Schweißautomaten beschränkt sondern auch bei Handschweißgeräten möglich und von Vorteil. Das neue Verfahren kann überall nützlich sein, wo zum Verbinden von thermoplastischen Kunststoffteilen Schweißnähte aus einem thermoplastischen Kunststoffmaterial hergestellt werden. Es kann zur Qualitätssicherung bei allen bekannten Kunststoffschweißverfahren, beispielsweise beim Heizkeil-, Heißluft-, Laser-, Infrarot- und Ultraschallschweißen hilfreich eingesetzt werden.

Nachfolgend wird die Erfindung anhand schematischer Übersichtsskizzen näher erläutert. Weitere Merkmale der Erfindung ergeben sich aus der folgenden Beschreibung der Erfindung in Verbindung mit den Ansprüchen und der beigefügten Zeichnung. Es zeigen:
- Figur 1: drei mögliche Kondensatoranordnungen (Figur 1a bis 1c) zum Ermitteln des Schmelzzustandes und/oder der Schmelzmenge von thermoplastischen Kunststoffmaterial für eine Schweißnaht gemäß dem erfindungsgemäßen Verfahren; und
- Figur 2: Positioniermöglichkeiten der Kondensatoranordnungen aus Figur 1 bezüglich der Schweißnaht an einem zu deren Herstellung ver- wendeten Schweißgerät.

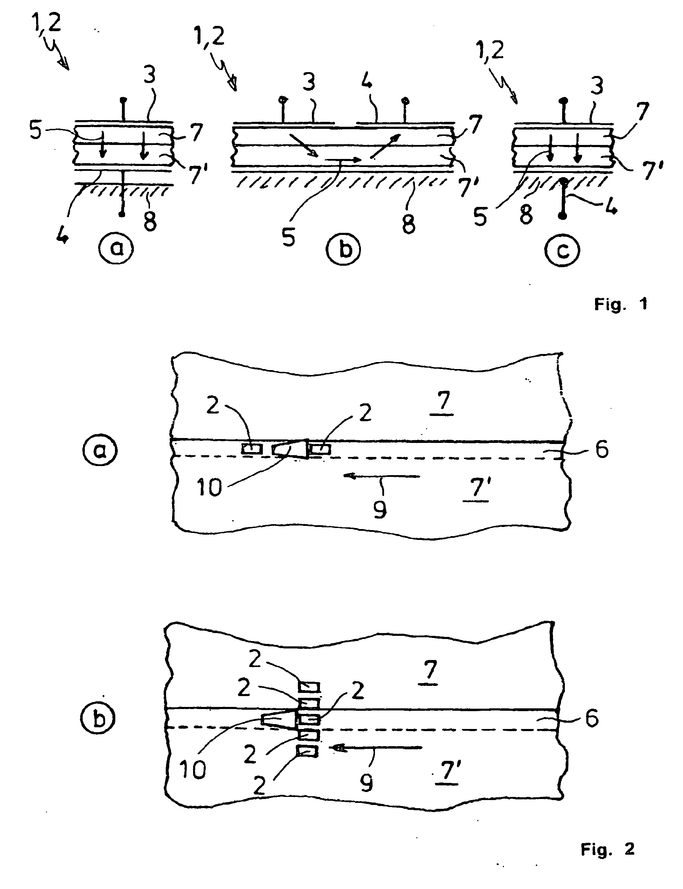

Die Figuren 1a bis 1c zeigen für die Anwendung des erfindungsgemäßen Verfahrens drei mögliche Kondensatoranordnungen, mit denen der Schmelzzustand und/oder die Schmelzmenge von thermischen Kunststoffmaterial bei der Herstellung einer Schweißnaht durch Messung der Permittivität ermittelbar ist. Die Kondensatoranordnungen 1 können jeweils einen einzigen Kondensator 2 oder mehrere als Array nebeneinander angeordnete Kondensatoren 2 umfassen. Jeder Kondensator 2 umfasst eine erste Elektrode 3 und eine zweite Elektrode 4, zwischen denen sich ein elektrisches Wechselfeld 5 erstreckt, wobei die Elektroden 3, 4 im Bereich einer in der Figur 2 dargestellten Schweißnaht 6 von Kunststoffteilen 7, 7' aus thermoplastischem Kunststoffmaterial angeordnet sind. Abgebildet ist eine Kondensatoranordnung 1, die nur einen Kondensator 2 aufweist. Die Elektroden 3, 4 des Kondensators 2 sind mit einer in der Zeichnung nicht dargestellten Messeinrichtung verbunden, die den Kondensator 2 mit verschiedenen Frequenzen betreiben kann und dabei Amplitude und Phasenverschiebung zur Ermittlung der Permittivität misst. Durch fortlaufende Auswertung der Messergebnisse mittels der Messeinrichtung kann geprüft werden, ob genügend Schmelzmasse aus dem thermoplastischem Kunststoffmaterial als Schmelzmenge zur Bildung einer haltbaren Schweißnaht vorhanden ist. Die Unterscheidung von plastifiziertem und nicht plastifiziertem Kunststoffmaterial ist möglich, da die elektrischen Eigenschaften von thermoplastischen Kunststoffmaterial temperaturabhängig sind. Ein geeigneter Schmelzzustand und eine definierte Schmelzmenge sind eine grundlegende Voraussetzung für eine qualitativ hochwertige Schweißverbindung zwischen den thermoplastischen Kunststoffteilen 7, 7'.

In den Figuren 1a, 1b sind die beiden Elektroden 3, 4 als Kondensatorplatten ausgebildet, wobei in der Figur 1a die Kondensatorplatten 3, 4 einander diametral gegenüberliegen und in der Figur 1b nebeneinander mit geringem Abstand zueinander angeordnet sind. In der Figur 1c wird die zweite Elektrode 4 von einer Fläche 8 gebildet, auf dem die Kunststoffteile 7, 7' angeordnet sind. Die Fläche 8 ist beispielsweise der Erdboden, auf dem verlegte Dichtungsbahnen 7, 7' zusammengefügt werden. Mindestens ein Elektrodenpaar 3, 4 ist günstigerweise nahe der lokalen Schweißstelle der Schweißnaht angeordnet. Bei den in den Figuren 1a, 1c dargestellten Kondensatoranordnungen 1 klemmen die Elektroden 3. 4. die Kunststoffteile 7, 7' entlang der Schweißnaht, während bei der in der Figur 1b gezeigten Kondensatoranordnung 1 die Elektroden 3, 4 die Kunststoffteile 7, 7' gegen die Fläche 8 pressen.

Die Figur 2 zeigt zwei Kondensatoranordnungen 1 mit mehr als einem Kondensator 2. Gemäß der Figur 2a werden zwei Kondensatoren 2 und nach der Figur 2b fünf Kondensatoren 2 zur Ermittlung des lokalen Schmelzzustandes und der lokalen Schmelzmenge für die Herstellung der Schweißnaht 6 verwendet. In der Figur 2a sind die beiden Kondensatoren 2 in Schweißrichtung 9 vor und nach einer Heizeinrichtung 10 des nicht dargestellten Kunststoffschweißgerätes angeordnet. Dies ermöglicht eine fortlaufende Differenzmessung der Permittivität entlang der Schweißnaht 6 während dem Schweißvorgang. Anstelle eines einzigen Kondensators 2 in Schweißrichtung 9 nach der Heizeinrichtung 10 können mehrere in Schweißrichtung 6 nacheinander angeordnete Kondensatoren 2 verwendet werden, um die Erstarrung des Schweißnaht 6 zu verfolgen. In der Figur 2b sind die fünf Kondensatoren 2 in einer Reihe quer zu Schweißrichtung 9 als Array angeordnet. Die Länge der Reihe ist größer als die Breite der Schweißnaht 6, so dass mittels den beiden äußeren Kondensatoren 2 ebenfalls eine Differenzmessung gegenüber den übrigen drei Kondensatoren 2 möglich ist. Durch die drei im Bereich der Schweißnaht 6 vorgesehenen Kondensatoren 2 können Veränderungen der Breite der Schweißnaht 6 zuverlässig festgestellt werden. Abhängig von der vorgesehenen oder realisierten Breite der Schweißnaht 6 liegen dabei ein bis drei der inneren Kondensatoren 2 des Array der Schweißnaht 6 direkt gegenüber. Die Anzahl der insgesamt für das Array verwendeten Kondensatoren 2 kann soweit sinnvoll beliebig variiert werden, um eine bessere Auflösung zu erreichen. Des weiteren kann in Schweißrichtung 9 vor der Heizeinrichtung 10 noch ein zusätzlicher in der Figur 2b nicht dargestellter Kondensator 2, entsprechend der Figur 2a angeordnet sein.

Bei einander gegenüberliegenden Elektroden 3, 4 ist deren Abstand zueinander ebenfalls relevant für die Bestimmung des Schmelzzustandes und/oder der Schmelzmenge des thermoplastischen Kunststoffmaterials der Kunststoffteile 7, 7' nahe der Heizeinrichtung 10. Außerdem hängt das Messergebnis von der Dicke der Kunststoffteile 7, 7' und/oder der Schweißnaht 6 ab. Die Einflüsse des Abstandes der Elektroden 3, 4 zueinander und der Materialdicke der Kunststoffteile 7, 7' werden durch die Differenzmessung eliminiert. Ansonsten ist durch die Kombination eines induktiven Sensors mit der Kondensatoranordnung 1 oder einem separaten Hall-Sensor eine materialdickenunabhängige respektive korrigierte Messung der Permittivität möglich.

## Patentansprüche

1. Verfahren zur Ermittlung des temperaturabhängigen Zustands, insbesondere des Schmelzzustandes und/oder der Schmelzmenge von thermoplastischem Kunststoffmaterial beim Herstellen einer Schweißnaht (6) aus thermoplastischem Kunststoffmaterial mittels eines Kunststoffschweißgeräts, wobei der temperaturabhängige Zustand von einer elektrischen Zustandsgröße des Kunststoffmaterials abgeleitet wird.

2. Verfahren nach Anspruch 1, **gekennzeichnet durch** die folgenden Schritte:
A Bestimmen und Zwischenspeichern einer elektrischen Zustandsgröße des thermoplastischen Kunststoffmaterials im Bereich der Schweißnaht (6) während der Temperaturbeaufschlagung zur Bildung einer Kunststoffmaterialschmelze für die Erzeugung der Schweißnaht (6);
B Ermittlung der Änderung der elektrischen Zustandsgröße **durch** Verrechnen der zwischengespeicherten Werte der Zustandsgrößen miteinander und/oder mit zusätzlichen Mess- oder Erfahrungswerten; und
C Vergleich des Resultats der Änderung der Zustandsgröße mit vorgebbaren Sollwerten und/oder mit vorgebbaren Eckwerten.

3. Verfahren nach Anspruch 2, **dadurch gekennzeichnet, dass** die elektrische Zustandsgröße des thermoplastsichen Kunststoffmaterials im Bereich der Schweißnaht (6) vor und während des Schweißvorgangs gemessen, ausgewertet und für die Einstellung der Maschinenparameter des Kunststoffschweißgerätes verwendet wird.

4. Verfahren nach einem der Ansprüche 1 bis 3, **dadurch gekennzeichnet, dass** als elektrische Zustandsgröße die Permittivität des thermoplastsichen Kunststoffmaterials verwendet wird.

5. Verfahren nach Anspruch 4, **dadurch gekennzeichnet, dass** die Permittivität mittels einer Kondensatoranordnung (1) ermittelt wird, wobei das Kunststoffmaterial als Dielelektrikum zwischen Elektroden (3, 4) der Kondensatoranordnung (1) verwendet wird.

6. Verfahren nach Anspruch 5, **dadurch gekennzeichnet, dass** für die Kondensatoranordnung (1) ein Plattenkondensator (2) verwendet wird.

7. Verfahren nach Anspruch 5, **dadurch gekennzeichnet, dass** für die Kondensatoranordnung (1) ein Array von Plattenkondensatoren (2) verwendet wird.

8. Verfahren nach Anspruch 5, **dadurch gekennzeichnet, dass** die Elektroden (3, 4) der Kondensatoranordnung (1) auf einander gegenüberliegenden Seiten des Kunststoffmaterials angeordnet werden.

9. Verfahren nach Anspruch 8, **dadurch gekennzeichnet, dass** als Elektroden (3, 4) Teile des Schweißgerät und eine hinter dem thermoplastsichen Kunststoffmaterial angeordnete Fläche verwendet werden.

10. Verfahren nach Anspruch 5, **dadurch gekennzeichnet, dass** die Elektroden (3, 4) nebeneinander auf einer Seite des Kunststoffmaterials angeordnet werden.

11. Verfahren nach einem der vorangegangenen Ansprüche 5 bis 10, **dadurch gekennzeichnet, dass** für die Bestimmung der Permittivität die Kondensatoranordnung (1) mit verschiedenen Frequenzen betrieben wird.

12. Verfahren nach einem der vorangegangenen Ansprüche, **dadurch gekennzeichnet, dass** zur Bestimmung des temperaturabhängigen Zustands im Bereich der Schweißnaht (6) während der Temperaturbeaufschlagung eine zusätzliche Dickenmessung durchgeführt wird, deren Ergebnis bei der Ermittlung der Änderung der Zustandsgröße berücksichtigt wird.

13. Verfahren nach einem der vorangegangenen Ansprüche, **dadurch gekennzeichnet, dass** vor der Temperaturbeaufschlagung zur Bildung der Kunststoffmaterialschmelze für die Schweißnaht (6), die elektrische Zustandsgröße des thermoplastischen Kunststoffmaterials im Bereich der Schweißnaht (6) ohne Temperaturbeaufschlagung bestimmt und gespeichert wird.

## Claims

1. Method for determining the temperature-dependent state, in particular the melt state and/or melt quantity of thermoplastic material when producing a weld seam (6) from thermoplastic material by means of a plastic welding device, wherein the temperature-dependent state is derived from a temperature-dependent electric state variable of the thermoplastic material.

2. Method as claimed in claim 1, **characterized by** the following steps:
A Determining and interim storing of a temperature-dependent electric state variable of the thermoplastic material in the field of the weld seam (6) during temperature admission for generation of a thermoplastic material melt for producing the welt seam (6);
B Ascertaining the variation of the electric state variable by setting off the interim stored values of the state variable against each other and/or with additional measured values or experienced data; and
C Comparing the result of the variation of the state variable with presettable target values or presettable benchmark values.

3. Method as claimed in claim 2, **characterized in that** the electric state variable of the thermoplastic material is measured in the field of the weld seam (6) before and during the welding operation, analysed and used for the adjustment of the machine parameters of the plastic welding device.

4. Method as claimed in one of the preceding claims 1 to 3, **characterized in that** as electric state variable the permittivity of the thermoplastic material is used.

5. Method as claimed in claim 4, **characterized in that** the permittivity is determined by means of a capacitor assembly (1), wherein the thermoplastic material is used as dielectric medium between electrodes (3, 4) of the capacitor assembly (1).

6. Method as claimed in claim 5, **characterized in that** the capacitor assembly (1) is a plate capacitor (2).

7. Method as claimed in claim 5, **characterized in that** for the capacitor assembly (1) an array of plate capacitors (2) is used.

8. Method as claimed in claim 5, **characterized in that** the electrodes (3, 4) of the capacitor assembly (1) are arranged at opposite sides of the thermoplastic material.

9. Method as claimed in claim 8, **characterized in that** as electrodes (3, 4) are used parts of the plastic welding device and an area being located behind the thermoplastic material.

10. Method as claimed in claim 5, **characterized in that** the electrodes (3, 4) are arranged next to each other at one side of the thermoplastic material.

11. Method as claimed in one of the preceding claims 5 to 10, **characterized in that** for the determination of the permittivity the capacitor assembly (1) is operated with different frequencies.

12. Method as claimed in one of the preceding claims, **characterized in that** for the determination of the temperature-dependent state in the field of the weld seam (6) an additionally thickness measuring is executed during the temperature admission, whose result is regarded with ascertaining the variation of the state variable.

13. Method as claimed in one of the preceding claims, **characterized in that** before the temperature admission for generation of a thermoplastic material melt for producing the welt seam (6) the electric state variable of the thermoplastic material in the field of the weld seam (6) is determined and stored without temperature admission.

## Revendications

1. Procédé de définition de l'état thermovariable, en particulier de l'état de fusion et/ou de la quantité en fusion d'une matière thermoplastique, lors de l'instauration d'un joint soudé (6) en matière thermoplastique au moyen d'un appareil de soudage de matières plastiques, ledit état thermovariable étant dérivé d'une grandeur électrique d'état de la matière plastique.

2. Procédé selon la revendication 1, **caractérisé par** les étapes suivantes :
A détermination et mémorisation provisoire d'une grandeur électrique d'état de la matière thermoplastique dans la région du joint soudé (6), au cours de la sollicitation thermique en vue de former une masse de matière plastique en fusion visant à produire ledit joint soudé (6) ;
B définition de la variation de ladite grandeur électrique d'état par recoupement des valeurs provisoirement mémorisées des grandeurs d'état, les unes avec les autres et/ou avec des valeurs mesurées ou empiriques additionnelles ; et
C comparaison du résultat de la variation de ladite grandeur d'état avec des valeurs de consigne pouvant être préétablies, et/ou avec des valeurs de repérage pouvant être préétablies.

3. Procédé selon la revendication 2, **caractérisé par le fait que** la grandeur électrique d'état de la matière thermoplastique est mesurée avant et pendant l'opération de soudage, dans la région du joint soudé (6) ; interprétée ; puis utilisée pour le réglage des paramètres fonctionnels de l'appareil de soudage de matières plastiques.

4. Procédé selon l'une des revendications 1 à 3, **caractérisé par le fait que** la permittivité de la matière thermoplastique est utilisée en tant que grandeur électrique d'état.

5. Procédé selon la revendication 4, **caractérisé par le fait que** la permittivité est définie au moyen d'un dispositif condensateur (1), la matière plastique étant employée, en tant que diélectrique, entre des électrodes (3, 4) dudit dispositif condensateur (1).

6. Procédé selon la revendication 5, **caractérisé par le fait qu'**un condensateur à lames (2) est employé en tant que dispositif condensateur (1).

7. Procédé selon la revendication 5, **caractérisé par le fait qu'**une rangée de condensateurs à lames (2) est employée en tant que dispositif condensateur (1).

8. Procédé selon la revendication 5, **caractérisé par le fait que** les électrodes (3, 4) du dispositif condensateur (1) sont placées sur des faces de la matière plastique tournées à l'opposé.

9. Procédé selon la revendication 8, **caractérisé par le fait que** des parties de l'appareil de soudage, et une surface située derrière la matière thermoplastique, sont employées en tant qu'électrodes (3, 4).

10. Procédé selon la revendication 5, **caractérisé par le fait que** les électrodes (3, 4) sont agencées en juxtaposition sur une face de la matière plastique.

11. Procédé selon l'une des revendications 5 à 10 précédentes, **caractérisé par le fait que** le dispositif condensateur (1) est actionné avec des fréquences différentes, en vue de déterminer la permittivité.

12. Procédé selon l'une des revendications précédentes, **caractérisé par le fait qu'**un mesurage supplémentaire de l'épaisseur, dont le résultat est pris en considération au stade de la définition de la variation de la grandeur d'état, est effectué dans la région du joint soudé (6), au cours de la sollicitation thermique, en vue de déterminer l'état thermovariable.

13. Procédé selon l'une des revendications précédentes, **caractérisé par le fait que**, préalablement à la sollicitation thermique visant à former la masse de matière plastique en fusion dédiée au joint soudé (6), la grandeur électrique d'état de la matière thermoplastique est déterminée et mémorisée dans la région dudit joint soudé (6), sans sollicitation thermique.
